(19) **Europäisches Patentamt**

**European Patent Office**

**Office européen des brevets**

(11) **EP 0 897 933 B1**

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(51) Int Cl.$^7$: **C08F 8/04**, C08C 19/02

(21) Anmeldenummer: **98115052.7**

(22) Anmeldetag: **11.08.1998**

(54) **Verfahren zur Herstellung von teilhydrierten Acrylnitril-Butadien-Kautschuken (HNBR) unter online Anwendung der Raman-Spektroskopie**

Process for preparing partially hydrogenated acrylonitrile-butadiene-rubbers with on-line application of Raman-spectroscopy

Procédé de préparation de caoutchouc acrylonitrile-butadiène partiellement hydrogéné avec traitement en ligne par spectroscopie Raman

(84) Benannte Vertragsstaaten:
**DE FR GB IT**

(30) Priorität: **21.08.1997 DE 19736310**

(43) Veröffentlichungstag der Anmeldung:
**24.02.1999 Patentblatt 1999/08**

(73) Patentinhaber: **BAYER AG**
**51368 Leverkusen (DE)**

(72) Erfinder:
• **Brück, Dieter, Dr.**
**51065 Köln (DE)**

• **Wolf, Udo, Dr.**
**47906 Kempen (DE)**

(56) Entgegenhaltungen:
EP-A- 0 013 054     EP-A- 0 265 706
FR-A- 2 322 878     US-A- 3 646 142
US-A- 5 302 667

• **YU. S. KOVSHOV: "HYDROGENATED BUTADIENE-ACRYLONITRILE RUBBERS (PRODUCTION, PROPERTIES AND APPLICATION)" INTERNATIONAL POLYMER SCIENCE AND TECHNOLOGY, Bd. 18, Nr. 2, 1991, Seiten 6-11, XP000243264 SHROPSHIRE, GB**

## Beschreibung

Die vorliegende Erfindung betrifft ein Verfahren zur Herstellung von teilweise hydriertem Acrylnitril-Butadien-Kautschuk (HNBR) in einem Druckreaktor durch Hydrierung von Acrylnitril-Butadien-Kautschuk (NBR) mittels homogener oder heterogener Katalyse unter Anwendung der Raman-Spektroskopie.

Die partielle Hydrierung der C-C-Doppelbindungen in Acrylnitril-Butadien-Kautschuken (NBR) führt zu einem Spezialkautschuk, dem hydrierten Nitril-Kautschuk (HNBR).

In den zur Zeit industriell durchgeführten Hydrierungsprozessen werden die NBR-Lösungen in Gegenwart eines homogenen oder heterogenen Katalysators batchweise in einem gerührten Druckautoklaven mit Wasserstoff hydriert. Die Polymerkonzentration in der zu hydrierenden Lösung beträgt ca. 15 Gew. %. In "Ullmann's Encyclopedia of Industrial Chemistry" von 1993 [1] werden die zur Hydrierung eingesetzten homogenen und heterogen Katalysatoren sowie die Reaktionsbedingungen für die Hydrierung beschrieben.

Bei der homogenen Hydrierung sind sowohl der Katalysator als auch das zur Hydrierung eingesetzte Substrat in Lösung. Chlorierte aromatische Kohlenwasserstoffe, wie z.B. Chlorbenzol, werden als Lösemittel eingesetzt. Als Katalysator werden vorzugsweise Rhodium- oder Ruthenium-Phosphin-Komplexe verwendet. Abhängig vom gewählten Katalysator und seiner Konzentration liegen die Reaktionstemperaturen im Bereich von 100 bis 150°C. Der Reaktionsdruck, der im wesentlichen durch den Wasserstoff-Partialdruck bestimmt wird, kann von einigen bis zu ca. 190 bar variieren.

Bei der heterogenen Hydrierung von NBR werden vorzugsweise Palladium-Katalysatoren auf z.B. Kohle, Calciumcarbonat oder Siliciumdioxid eingesetzt, die im gelösten Substrat dispergiert sind. Die Reaktion wird in der Regel in Ketonen als Lösemittel bei einer Temperatur von ca. 50°C und einem Druck von ca. 50 bar durchgeführt.

Während zur Vulkanisation von teilweise hydriertem HNBR Schwefel oder Schwefelspender verwendet werden können, ist bei den vollständig hydrierten Produkten der Einsatz von Peroxid oder energiereichen Strahlen zur Vernetzung erforderlich. Aufgrund ihrer guten Bruchdehnung und Weiterreißfestigkeit werden die teilhydrierten HNBR-Typen gegenüber den vollständig hydrierten Produkten am Markt bevorzugt.

Ein wesentliches Problem insbesondere bei der Herstellung der teilhydrierten HNBR-Produkte ist die exakte und reproduzierbare Einstellung des gewünschten Hydriergrades. Es ist bekannt, daß die C-C-Doppelbindungen der 1,2-vinyl-konfigurierten Butadieneinheiten in NBR sehr schnell hydriert werden, gefolgt von den 1,4-cis-konfigurierten Einheiten. Die 1,4-trans-konfigurierten Butadieneinheiten werden vergleichsweise langsam hydriert. Die zur Hydrierung verwendeten NBR-Produkte zeichnen sich durch einen überwiegenden Anteil der 1,4-trans-konfigurierten Doppelbindungen aus.

Der Fortgang der Hydrierung läßt sich durch Bestimmung der Wasserstoffaufnahme oder genauer durch Infrarot-spektroskopische (IR) Analyse von aus dem Reaktor entnommenen Proben bestimmen. Eine entsprechende IR-Analysenmethode wird in ASTM D 5670-95 beschrieben. Der Nachteil dieser Verfahrensweise besteht darin, daß in der Regel ca. 20 bis 30 Minuten verstreichen, bis das Analysenergebnis vorliegt. In diesem Zeitraum kann die Reaktion bereits über den gewünschten Endpunkt hinaus fortgeschritten sein. Da die Durchführung der Hydrierung aufwendige, druckfeste Reaktoren erfordert, ist die Wirtschaftlichkeit des gesamten Prozesses wesentlich auch von der Raum-Zeit-Ausbeute abhängig. Die Wirtschaftlichkeit des Hydrierverfahrens kann entscheidend verbessert werden, indem der Produktdurchsatz bei gleichzeitiger Sicherstellung der spezifikationsgerechten Produktqualität gesteigert wird.

Zum Zwecke der Prozeßkontrolle wird häufig die NIR-(Nah-Infrarot)Spektroskopie angewendet. Da für die NIR-Technik geeignete Lichtleiter zur Verfügung stehen, kann das entsprechende NIR-Spektrometer auch in größerer Entfernung vom Reaktor aufgestellt werden. Der Nachteil der NIR-Technik besteht aber darin, daß nicht die Fundamentalschwingungen des IR-Spektrums, sondern die in der Regel überlagerten Oberton- und Kombinationsschwingungen gemessen werden. Unter der Voraussetzung, daß die Hydrierung stets unter den gleichen Bedingungen (Temperatur, Polymer-Konzentration, Druck) abläuft, kann mittels chemometrischer Methoden der Hydriergrad ermittelt werden. Da technische Verfahren stets innerhalb einer gewissen Bandbreite variieren, ist eine sichere Bestimmung der gewünschten Reaktionsparameter nicht gegeben.

Es bestand daher die Aufgabe, ein neues Verfahren zu finden, das die Einstellung eines gewünschten Hydriergrades von HNBR bei gleichzeitig verbesserter Raum-Zeit-Ausbeute ermöglicht.

Gegenstand der Erfindung ist daher ein Verfahren zur Herstellung von teilweise hydriertem Acrylnitril-Butadien-Kautschuk in einem Druckreaktor durch Hydrierung von Acrylnitril-Butadien-Kautschuk unter homogener oder heterogener Katalyse, das dadurch gekennzeichnet ist, daß man den Reaktorinhalt vor Beginn der Hydrierung inertisiert, die Raman-Spektren des Reaktorinhaltes in kurzen Zeitabständen aufnimmt und anhand der Intensitäten der Raman-Emissionslinien den aktuellen Hydriergrad des Produktes ermittelt und bei Erreichen des gewünschten Hydriergrads die Reaktion durch geeignete Maßnahmen abbricht.

Der Raman-Effekt von Polymeren wird in der Literatur (siehe z.B. P.J. Hendra, C.H. Jones and G. Warnes; Fourier Transform Raman Spectroscopy, Techniques and Chemical Applications, Ellis Horwood Chichester (UK) (1991)) beschrieben. Gemessen wird das emittierte Raman-Signal, das durch eine intensive Lichtquelle angeregt wird. Zur Anregung des Raman-Effekts wird in der Regel Laserlicht definierter Wellenlänge $\lambda_0$ verwendet. Üblich ist die Verwendung von Neodym-Yttriumaluminiumgranat (Nd:YAG)-Lasern, die bei einer Wellenlänge von 1,06 µm emittieren, Helium-Neon ($\lambda$=633 nm)-, Argon-Ionen ($\lambda$=488, 515 nm)-, oder Halbleiter-Lasern (verschiedene Wellenlängen). Die Verwendung des Nd:YAG-Lasers hat gegenüber dem Helium-Neon-Laser den Vorteil, daß aufgrund der längeren Anregungswellenlänge störende Fluoreszenz von organischen Materialien weniger stark erzeugt wird.

In der Regel werden zur Auswertung die "Stokes'schen Linien ($\lambda_i > \lambda_0$)" des Raman-Spektrums verwendet ($\lambda_i$: Wellenlänge des Raman-Signals). Insbesondere bei höherer Temperatur können aber auch die "Anti-Stokes'schen Linien ($\lambda_i < \lambda_0$)" für eine Auswertung der Raman-Spektren von Bedeutung sein.

Zur Messung der Raman-Spektren können am Markt angebotene und von C. Henry in Analytic Chemistry News & Features, May (1997) 309A beschriebene dispersive Spektrometer oder Fourier-Transform (FT)-Raman-Spektrometer, die das Raman-Spektrum mit einem Interferometer erzeugen, verwendet werden. Im Falle von dispersiven Spektrometern können CCD-Detektoren eingesetzt werden, während für FT-Raman-Geräte InGaAs- oder mit flüssigem Stickstoff gekühlte Germanium-Detektoren geeignet sind. Bei dem erfindungsgemäßen Verfahren werden vorzugsweise FT-Raman-Spektrometer mit Anregung der Ramanstrahlung durch einen Nd:YAG-Laser verwendet, weil hiermit die Anregung störender Fluoreszenz weitgehend vermieden ist.

Als erfindungsgemäße Vorrichtung zur Durchführung der Raman-Spektroskopie in einem Druckreaktor eignen sich Schaugläser, bevorzugt direkt ein Schauglas am Reaktor, die das Einbringen der Erregerstrahlung in den Reaktor sowie den Austritt der Raman-Strahlung aus dem Reaktor ermöglichen. Mit der Verwendung von Schaugläsern können sicherheitstechnische Belange besonders einfach berücksichtigt werden, da diese als Standardbauteile zur Sichtkontrolle des Reaktorinhaltes von Druckreaktoren käuflich bezogen werden können.

Als Schauglas eignen sich Materialien, wie z.B. Borsilikatglas, Quarz oder Saphir, die im Bereich der Erregerwellenlänge $\lambda_0$ einschließlich des relevanten Wellenlängenbereichs ($\lambda_0 \pm \lambda_i$) der Ramanstreuung keine Absorption oder Fluoreszenz zeigen und in Falle von Glas nach DIN 7080, 7081, 8902 und 8903 hergestellt wurden, so daß sie eine behördliche Zulassung für den gewählten Druckbereich nach der Druckbehälterverordnung (AD-N4) besitzen. Solche Gläser sind z. B. beschrieben im Prospekt Seite 11 der "Technische Glaswerke Ilmenau GmbH", D 98684 Ilmenau.

Das Schauglas kann in der Wand des betreffenden Reaktors oder am Ende eines druckfesten Metallrohrs, das durch die Wand, den Boden oder durch den Deckel des Reaktors in die Reaktionslösung eintaucht, angebracht sein.

Zur Anregung des Raman-Signals wird das Laserlicht durch das Schauglas in den Reaktor geleitet. Durch dasselbe Schauglas verläßt das Raman-Streulicht wieder den Reaktor und kann mittels einer geeigneten Optik auf den Detektor eines Raman-Spektrometers fokussiert werden.

Soll das Raman-Spektrometer an einem vom Reaktor weiter entfernten Ort aufgestellt werden, verwendet man zum Transport des Erregerlichtes sowie zur Ableitung des Raman-Signals geeignete Lichtleiter. Aufgrund der geringen Eigenabsorption können im Falle der Anregung der Raman-Strahlung mittels Nd:YAG-Laser Quarzlichtleiter verwendet werden. Am Ende des Lichtleiters für die Laserstrahlung kann eine geeignete optische Vorrichtung (Sonde) angebracht sein, die das Erregerlicht durch das Schauglas in die Lösung fokussiert, das Raman-Signal aus einem bestimmten Raumwinkel einsammelt, die Rayleigh-Streuung gegebenenfalls ausfiltert und in einen weiteren Lichtleiter einkoppelt. Derartige Optiken können käuflich bezogen werden (z.B. Fa. Dilor sowie Bruker).

Die Brennweite der Sonde wird so ausgelegt oder die Sonde so placiert, daß der Brennpunkt innerhalb der Reaktionslösung 0 bis 5 cm, vorzugsweise 0 bis 1cm, hinter dem Schauglas liegt. Für Schaugläser von 1,5 bis 3 cm Dicke ergeben sich damit z.B. Brennweiten von 2 bis 3,5 cm. Es können Fix-Fokus oder Vario-Objektive mit großem Öffnungswinkel eingesetzt werden. Zur Vermeidung von Wärmeleitung wird die Sonde vorzugsweise in einigem Abstand vor dem Schauglas angebracht (z.B. 2 bis 5 mm, je nach gewählter Brennweite des Objektivs der Sonde).

In Kenntnis der Unfallverhütungsvorschrift der Berufsgenossenschaft der chemischen Industrie VBG 93 "Laserstrahlung" wird bei der erfindungsgemäßen Vorrichtung die Sonde nach außen hin so abgeschirmt, daß eine unkontrollierte Freisetzung von Laserstrahlung nicht möglich ist. Dies geschieht vorzugsweise dadurch, daß man das Objektiv der Sonde bündig durch die Öffnung einer Blende führt, die in einigem Abstand vor dem Schauglas angebracht wird. Die Sonde wird in diesem Fall so weit in Richtung des Schauglases verschoben, bis ein optimales Raman-Signal des Reaktorinhaltes gemessen wird.

Eine weitere erfindungsgemäße Variante der Prozeßführung besteht darin, daß man eine in die Reaktionslösung eingetauchte Lichtleiter-gekoppelte Sonde zur Messung des Raman-Effekts verwendet. Lichtleiter-gekoppelte Sonden, über die das Erregerlicht unmittelbar in die Reaktionslösung geleitet wird und die das Raman-Signal sammeln, sind prinzipiell bekannt. Aufgrund der hohen Sicherheitsanforderungen bezüglich Druck- und Temperaturfestigkeit, sind solche Lichtleiter-Sonden z. Z. nur eingeschränkt zur Verfolgung von Hydrierreaktionen unter Druck einsetzbar.

Die Verwendung von Laserstrahlung als Erregerlichtquelle für die Raman-Strahlung muß bei dem beschriebenen Verfahren die Inertisierung des Reaktorinhaltes voraussetzen, da die in den Reaktor eingestrahlte Laserstrahlung unter fokussierenden Bedingungen eine hohe Energiedichte erreicht und somit eine potentielle Zündquelle darstellt. Dies bedeutet, daß Sauerstoff vor Beginn der Hydrierung vollständig aus dem Reaktor entfernt werden muß. Hierzu wird vor Einschalten der Laserstrahlung und vor Beaufschlagung des Reaktors mit Wasserstoff die gesamte Reaktionslösung mehrmals mit Stickstoff gespült. Bevorzugt wird der Reaktorinhalt permanent auf die Anwesenheit von Sauerstoff hin kontrolliert.

Nach Erreichen des gewünschten Hydriergrades wird der Laser abgeschaltet und die Reaktion durch Entspannung des Wasserstoffdrucks zum Stillstand gebracht.

Die zur Verbesserung des Signal-Rauschverhältnisses in einem bestimmten Zeitintervall akkumulierten Raman-Spektren (z.B. 200 scans mit einer spektralen Auflösung von 4 cm$^{-1}$) werden dann im Spektralbereich von 4000-50 cm$^{-1}$ relativer Verschiebung des Raman-Signals gegenüber der anregenden Laserstrahlung im Stokes- und Anti-Stokes-Bereich, bevorzugt im Stokes-Bereich 2500-1500 cm$^{-1}$ ausgewertet.

Die Raman-Spektren von NBR zeigen die folgenden charakteristische Signale für C-C-Doppelbindungen der Butadieneinheiten: $I_0(1667)$ für 1,4-trans-C=C bei ca. 1667 cm$^{-1}$, $I_0(1654)$ für 1,4-cis-C=C bei ca. 1654 cm$^{-1}$ und $I_0(1641)$ für 1,2-vinyl-C=C bei ca. 1641 cm$^{-1}$. Die CN-Gruppierung (Nitrilgruppe) ergibt ein Raman-Signal $I_0(2237)$ bei ca. 2237 cm$^{-1}$.

Da die 1,4-trans-konfigurierten Butadieneinheiten vergleichsweise langsam hydriert werden, wird der Restdoppelbindungsgehalt des Produktes mit fortschreitender Hydrierung im wesentlichen nur noch durch die 1,4-trans-konfigurierten Doppelbindungen bestimmt. Da die Nitrilgruppe bei der Hydrierung nicht verändert wird, kann sie z.B. als interner Standard herangezogen werden. Somit ist der Restdoppelbindungsgehalt $RD_t(\%)$ zum Zeitpunkt t, nach Hydrierung der 1,4-cis- und 1,2-vinyl-C=C Strukturen, zum Quotienten $Q_t = I_t(1667) / I_t(2237)$ näherungsweise proportional, wobei $I_t(1667)$ und $I_t(2237)$ die Intensitäten des Raman-Spektrums bei 1667 cm$^{-1}$ und 2237 cm$^{-1}$ des teilhydrierten Produktes bezeichnen.

Wird nun der Gehalt der 1,4-trans-C-C-Doppelbindungen [DB(1,4-trans)] des für die Hydrierung eingesetzten NBR-Produktes vor der Hydrierung mittels klassischer Labormethode bestimmt, so ist mit $I_0$ und $I_t$, den jeweiligen Raman-Intensitäten zu Beginn und zum Zeitpunkt t der Hydrierung, die aktuelle [Konzentration $RD(1,4\text{-trans})]_t$ zu ermitteln als:

$$(1) \qquad [RD(1,4\text{-trans})]_t = [I_t(1667)/I_t(2237)]/[I_0(1667)/I_0(2237)] * [DB(1,4\text{-trans})]$$

Analog können, sofern erforderlich, auch die Konzentrationen $[RD(1,4\text{-cis})]_t$ und $[RD(1,2\text{-vinyl})]_t$ bestimmt werden.

Bevorzugt wird daher der gewünschte Hydriergrad des teilhydrierten HNBRs gemäß den vorstehenden Ausführungen und der Gleichung 1) so bestimmt, daß man die Intensitätsverhältnisse $Q_0 = I_0(1667)/I_0(2237)$ und $Q_t = I_t(1667)/I_t(2237)$ der Raman-Emissionslinien der 1,4-trans-C-C-Doppelbindungen bei 1667 cm$^{-1}$ zu den ACN-Gruppen in NBR bei 2237 cm$^{-1}$ vor (t = 0) und zum Zeitpunkt t der Hydrierung bestimmt und den aktuellen Hydriergrad $[RD(1,4\text{-trans})]_t$ durch Multiplikation von $Q_t/Q_0$ mit dem %-Anteil der 1,4-trans-C-C-Doppelbindungen im Ausgangsprodukt berechnet.

Obwohl der Einsatz der Raman-Spektroskopie für die Polymerisation von z.B. Vinylacetat, Styrol und Vinylimidazol, Styrol, sowie von Methylmethacrylat aus T. Özpozan, B. Schrader, St. Keller, Spectrochimica Acta Part A 53 (1997) 1 bis 7, E.P.C. Lai, H.S. Ghaziaskar, Applied Spektroscipy 48 (1994) 1011 sowie J. Haigh, A. Brookes, P. J. Hendra, A. Strawen, C. Nicolas, M. Purprik, Spectrochimica Acta Part A 53 (1997) 9/19 und E. Gulari, K. Mc Keigue, K. Y. Sng, Macromolecules 1984, 17, 1822 bis 1825 bekannt war, war es trotzdem überraschend, daß die Raman-Spektroskopie bei der katalytischen Hydrierung von NBR zum HNBR eingesetzt werden konnte, da diese Reaktion unter Druck und bei hohen Temperaturen durchgeführt wird. Es ist nämlich bekannt, daß die Intensität der Raman-Streuung sehr schwach ist und durch Fluoreszenz insbesondere bei technischen Produkten (Polymeren, Katalysatoren) gestört wird. Weiterhin wird bei höheren Temperaturen, insbesondere bei großen Reaktoren, der Anteil der Wärmestrahlung größer, was zu einer Störung der Messung führen kann. Daß die schwache Raman-Streuung durch ein dickes Schauglas, bei z.B. 135°C, in Gegenwart eines metallorganischen Katalysators beobachtet werden kann, war daher - wie ausgeführt - nicht zu erwarten. In diesem Zusammenhang sei auch auf die obige Literaturstelle von Özpozan, die die Polymerisation von Vinylacetat unter Verwendung der Raman-Spektroskopie beschreibt, hingewiesen, wo auf Seite 2 der Literaturstelle beim experimentellen Teil darauf hingewiesen wird, daß die übliche Herstellungsweise von Polyvinylacetat abgewandelt wurde, um bessere Bedingungen für die Raman-Spektroskopie zu erhalten.

**Beispiele**

**Beispiel 1**

In einem mit einem Schauglas von 1,5 cm Dicke und 3,9 cm lichter Weite und mit einem Migrührer ausgerüsteten 2 Liter Autoklaven werden unter Stickstoff eine Lösung von 225 g NBR (mit ca. 40 % Acrylnitril- und ca. 60% Butadien-Anteil, davon 85,5 % 1,4 trans; 7,3 % 1,4 cis und 7,2 % 1,2-vinyl Butadien-Einheiten), 2,25 g Triphenylphosphin, 0,675g Rhodium-Katalysator und 1275 g Chlorbenzol vorgelegt. Anschließend wird die Lösung bei einer Drehzahl von 280 min$^{-1}$ dreimal mit Stickstoff gespült und jeweils auf Normaldruck entspannt.

Im äußeren Flansch des Schauglases ist eine mit einer Bohrung versehene Kunststoffscheibe angebracht. Durch die Bohrung der Kunststoffscheibe wird das Objektiv einer Sonde (Fa. Bruker, Karlsruhe) mit einer Brennweite von 2 cm, die über zwei 15 m lange Lichtleiter mit dem FT-Raman-Spektrometer (RFS 100, mit 1W Nd:YAG Laser, Fa. Bruker, Karlsruhe) verbunden ist, in Richtung des Schauglases so weit verschoben, bis ein maximales Raman-Signal gemessen wird. Der Abstand des Objektivs zum Schauglas betrug in diesem Fall 4 mm. Zur Kühlung der Sonde und zur Inertisierung des zwischen dem Schauglas und der Kunststoffscheibe befindlichen Raumes wird Stickstoff verwendet, so daß stets eine Temperatur unter 80°C eingehalten werden kann.

Dann wird die Reaktionslösung auf die Reaktionstemperatur 135°C aufgeheizt. Danach wird durch Aufnahme eines Raman-Spektrums (200 scans mit 4 cm$^{-1}$ spektraler Auflösung) das Verhältnis der Raman-Intensitäten $I_0(1667)$ und $I_0(2237)$ bestimmt. Die Bestimmung der Ramanintensitäten $I_t(i)$ erfolgt nach dem Basislinienverfahren. Folgende Basislinien werden verwendet: für $I_t(1667)$ Basislinie zwischen 1686 und 1647 cm$^{-1}$, für $I_t(2237)$ Basislinie zwischen 2263 und 2212 cm$^{-1}$. Damit ergibt sich für das Verhältnis der Ramanintensitäten $I_0(1667)/I_0(2237)$ des Ausgangsmaterials bei 135°C der folgende Wert: (0,0274/0,0341) = 0,8035.

Anschließend wird Wasserstoff bis zu einem Gesamtdruck von 35 bar aufgedrückt. Gleichzeitig wird ein Spektrenmeß- und Auswerteprogramm gestartet, das die on-line Verfolgung der Hydrierung durch Bestimmung des Verhältnisses der Raman-Intensitäten $I_t(1667)$ und $I_t(2237)$ zum Zeitpunkt t und eine Darstellung des momentanen Restdoppelbindungsgehalts $(Rd)_t$ gemäß Gleichung (1) auf dem Bildschirm des angeschlossenen Computers erlaubt. Mit Aufnahme von jeweils 200 scans bei 4 cm$^{-1}$ Auflösung ergab sich ein Zeitbedarf von ca. 6,5 min pro Spektrum. Nach einer Hydrierzeit von t=6,5 Stunden betrug das Verhältnis der Ramanintensitäten $I_t(1667)/I_t(2237)$ = 0,18. Damit berechnet sich mit Gleichung (1) ein Restdoppelbindungsgehalts von:

$$[RD(1,4\text{-trans})]_{6,5h} = [0,18/0,8035] * 85,5 \% = 19,2 \%.$$

Bei diesem Wert wurde die Reaktion durch Entspannen auf Normaldruck abgebrochen.

**Patentansprüche**

1. Verfahren zur Herstellung von teilweise hydriertem Acrylnitril-Butadien-Kautschuk (HNBR) in einem Druckreaktor durch Hydrierung von Acrylnitril-Butadien-Kautschuk (NBR) mittels homogener oder heterogener Katalyse, **dadurch gekennzeichnet, daß** man den Reaktorinhalt vor Beginn der Hydrierung inertisiert, die Raman-Spektren des Reaktorinhaltes in kurzen Zeitabständen aufnimmt und anhand der Intensitäten der Raman-Emmisionslinien den aktuellen Hydriergrad des Produktes ermittelt und bei Erreichen des gewünschten Hydriergrads die Reaktion durch geeignete Maßnahmen abbricht.

2. Verfahren nach Anspruch 1, **dadurch gekennzeichnet, daß** man die Intensitätsverhältnisse $Q_0 = I_0(1667)/I_0(2237)$ und $Q_t=I_t(1667)/I_t(2237)$ der Raman-Emissionslinien der 1,4-trans-C-C-Doppelbindungen bei 1667cm$^{-1}$ zu den ACN-Gruppen in NBR bei 2237 cm$^{-1}$ vor (t=0) und zum Zeitpunkt t der Hydrierung bestimmt und den aktuellen Hydriergrad $[RD(1,4\text{-trans})]_t$ durch Multiplikation von $Q_t/Q_0$ mit dem %-Anteil der 1,4-trans-C-C-Doppelbindungen im Ausgangsprodukt berechnet.

3. Verfahren nach Anspruch 1, **dadurch gekennzeichnet, daß** als Vorrichtung zur Durchführung des Raman-Effekts ein druckfestes Schauglas am Reaktor angebracht wird, durch das das Erregerlicht in die Reaktionslösung geleitet und die Raman-Streuung beobachtet wird.

4. Verfahren nach Anspruch 1 und 3, **dadurch gekennzeichnet, daß** sich das Schauglas in einem druckfesten Rohr befindet, das durch dafür geeignete Öffnungen am Reaktor in die Reaktionslösung eintaucht.

5. Verfahren nach Ansprüchen 1 bis 4, **dadurch gekennzeichnet, daß** vor dem Schauglas eine über Lichtleiter mit dem Raman-Spektrometer verbundene optische Vorrichtung (Sonde) angebracht ist, deren Objektiv eine solche Brennweite aufweist, daß das Erregerlicht in einem Bereich von 0 bis 5 cm, hinter dem Schauglas in die Reaktionslösung fokussiert und die Raman Streuung aus diesem Bereich gesammelt wird.

6. Verfahren nach Ansprüchen 1 bis 4, **dadurch gekennzeichnet, daß** die optische Vorrichtung durch die Öffnung einer Blende geführt wird, die das Austreten von Laserlicht verhindert.

7. Verfahren nach Anspruch 1, **dadurch gekennzeichnet, daß** als Vorrichtung zur Durchführung des Raman-Effekts eine druckfeste Eintauchsonde verwendet wird.

8. Verfahren nach Anspruch 1, **dadurch gekennzeichnet, daß** die Raman-Strahlung mit Hilfe eines Nd:YAG-Lasers angeregt wird und man zur Messung des Raman-Spektrums ein nach dem **F**ourier-**T**ransformationsprinzip arbeitendes FT-Raman-Spektrometer einsetzt.

9. Verfahren nach Anspruch 1, **dadurch gekennzeichnet, daß** die Intensitäten der Raman-Spektren bei 1667, 1654 und 1641 $cm^{-1}$ zur Bestimmung des Hydriergrades verwendet werden.

10. Verfahren nach Anspruch 1, **dadurch gekennzeichnet, daß** man die Reaktion bei Erreichen des gewünschten Hydriergrades durch Entspannen abbricht.

## Claims

1. A process for the preparation of partially hydrogenated acrylonitrile-butadiene rubber (HNBR) in a pressurised reactor by hydrogenation of acrylonitrile-butadiene rubber (NBR) by means of homogeneous or heterogeneous catalysis, **characterised in that** the reactor contents are rendered inert before commencement of the hydrogenation, the Raman spectra of the reactor contents are recorded at short time intervals and the actual degree of hydrogenation of the product is determined from the intensities of the Raman emission lines and, on attainment of the required degree of hydrogenation, the reaction is arrested by suitable means.

2. A process according to claim 1, **characterised in that** the intensity ratios $Q_o = I_o(1667)/I_o(2237)$ and $Q_t = I_t(1667)/I_t(2237)$ of the Raman emission lines of the 1,4-trans-C-C- double bonds at 1667 $cm^{-1}$ to the ACN groups in NBR at 2237 $cm^{-1}$ before (t = 0) and at the time t of the hydrogenation are determined, and the actual degree of hydrogenation $[RD(1,4\text{-trans})]_t$ is calculated by multiplication of $Q_t/Q_o$ by the percentage content of the 1,4-trans-C-C-double bonds in the starting product.

3. A process according to claim 1, **characterised in that** a pressure-resistant inspection glass is attached to the reactor as a device for carrying out the Raman effect, through which inspection glass the exciting light is passed into the reaction solution and the Raman scattering is observed.

4. A process according to claims 1 and 3, **characterised in that** the inspection glass is situated in a pressure-resistant tube which dips into the reaction solution through suitable openings in the reactor.

5. A process according to claims 1 to 4, **characterised in that** an optical device (probe) connected with the Raman spectrometer via optical fibres is mounted in front of the inspection glass, the objective of the optical device has a focal length such that the exciting light is focused into the reaction solution in a range of from 0 to 5 cm behind the inspection glass and the Raman scattering from this range is collected.

6. A process according to claims 1 to 4, **characterised in that** the optical device is passed through the opening of a diaphragm which prevents the exit of laser light.

7. A process according to claim 1, **characterised in that** a pressure-resistant immersion probe is used as a device for carrying out the Raman effect.

8. A process according to claim 1, **characterised in that** the Raman radiation is excited with the aid of an Nd:YAG laser and an FT-Raman spectrometer operating according to the **F**ourier **T**ransformation principle is used for measuring the Raman spectrum.

9. A process according to claim 1, **characterised in that** the intensities of the Raman spectra at 1667, 1654 and 1641 cm$^{-1}$ are used for determining the degree of hydrogenation.

10. A process according to claim 1, **characterised in that** the reaction is arrested by release of pressure on attainment of the required degree of hydrogenation.


**Revendications**

1. Procédé pour la préparation d'un caoutchouc acrylonitrile/butadiène partiellement hydrogéné dans un réacteur sous pression par hydrogénation d'un caoutchouc acrylonitrile-butadiène (NBR) avec catalyse homogène ou hétérogène, **caractérisé en ce que** l'on met le contenu du réacteur en atmosphère inerte avant de commencer l'hydrogénation, on enregistre les spectres Raman du contenu de réacteur à cours intervalles et à partir des intensités des raies d'émission Raman on détermine le taux d'hydrogénation momentané du produit, et lorsqu'on a atteint le taux d'hydrogénation voulu, on interrompt la réaction par des moyens appropriés.

2. Procédé selon la revendication 1, **caractérisé en ce que** l'on détermine le rapport des intensités $Q_0 = I_0(1667)/I_0(2237)$ et $Q_t=I_t(1667)/I_t(2237)$ des raies d'émission Raman des doubles liaisons 1,4-trans-C=C à 1667 cm$^{-1}$ à celles des groupes ACN du NBR à 2237 cm$^{-1}$ avant (t=0) l'hydrogénation et au moment t de l'hydrogénation et on calcule le taux d'hydrogénation momentané $[RD(1,4-trans)]_t$ en multipliant $Q_t/Q_0$ par la proportion % des doubles liaisons 1,4-trans-C=C du produit de départ.

3. Procédé selon la revendication 1, **caractérisé en ce que** le dispositif servant à l'observation de l'effet Raman est un hublot résistant à la pression disposé sur le réacteur, au travers duquel on envoie la lumière excitatrice dans la solution de réaction et on observe la diffraction Raman.

4. Procédé selon les revendications 1 et 3, **caractérisé en ce que** le hublot est placé dans un tube résistant à la pression qui plonge dans la solution de réaction au travers d'orifices appropriés du réacteur.

5. Procédé selon les revendications 1 à 4, **caractérisé en ce que**, devant le hublot, on a placé un dispositif optique (sonde) relié par un conducteur de lumière au spectromètre Raman et dont l'objectif a une distance focale telle que la lumière excitatrice est focalisée dans la solution de réaction, dans un intervalle de 0 à 5 cm derrière le hublot, et recueille les radiations Raman dans cet intervalle.

6. Procédé selon les revendications 1 à 4, **caractérisé en ce que** le dispositif optique passe au travers l'ouverture d'un écran qui évite des sorties de lumière laser.

7. Procédé selon la revendication 1, **caractérisé en ce que** le dispositif utilisé pour observation de l'effet Raman est une sonde plongeante résistant à la pression.

8. Procédé selon la revendication 1, **caractérisé en ce que** la radiation Raman est excitée à l'aide d'un laser Nd: YAG et **en ce que**, pour la mesure du spectre Raman, on utilise un spectromètre FT-Raman opérant selon le principe de la transformation de Fourier.

9. Procédé selon la revendication 1, **caractérisé en ce que** pour la détermination du taux d'hydrogénation, on exploite les intensités des spectres Raman à 1667, 1654 et 1641 cm$^{-1}$.

10. Procédé selon la revendication 1, **caractérisé en ce que** l'on interrompt la réaction par une détente lorsque l'on a atteint le taux d'hydrogénation voulu.